# EUROPEAN PATENT SPECIFICATION

(11) **EP 4 163 051 B1**
(45) Date of publication and mention of the grant of the patent: **17.04.2024**
(21) Application number: 21201564.8
(22) Date of filing: 08.10.2021
(51) Int. Cl.: B23P 19/00

(54) **DEVICE AND METHOD FOR SETTING FASTENERS IN OPENINGS IN A VEHICLE BODY COMPONENT**
VORRICHTUNG UND VERFAHREN ZUM SETZEN VON BEFESTIGUNGSELEMENTEN IN ÖFFNUNGEN IN EINER FAHRZEUGKAROSSERIEKOMPONENTE
DISPOSITIF ET PROCÉDÉ POUR POSER DES ÉLÉMENTS DE FIXATION DANS DES OUVERTURES DANS UN COMPOSANT DE CARROSSERIE DE VÉHICULE

(43) Date of publication of application: 12.04.2023
(73) Proprietor: Newfrey LLC, New Britain, CT 06053 (US)
(72) Inventor: Boensel, Sven, 35394 Gießen (DE); Fries, Thomas, 35394 Gießen (DE); Kaesler, Michael, 35394 Gießen (DE); Wallbott, Tim, 35394 Gießen (DE)
(74) Representative: SBD IPAdmin

(56) References cited:
- EP-A1- 3 141 318
- EP-A1- 3 476 526
- EP-A1- 3 530 369
- DE-A1- 10 060 415
- DE-A1- 19 700 271
- DE-A1-102011 103 332
- DE-A1-102017 008 858
- US-A1- 2014 305 068

## Description

The present invention relates to a device for setting fasteners in openings in a vehicle body component according to the preamble of claim 1, and in particular but not exclusively for setting fasteners in a roof bar. The present invention is further directed to a setting system comprising such device and to a method for automatically setting fasteners in openings of a vehicle body component.

Document DE 197 00 271 A1 discloses a device for setting fasteners in openings in a vehicle body component according to the preamble of claim 1.

Fastening clips and fasteners are primarily used in automotive manufacture in order to attach mounted parts or trim parts to the body or to body parts such as doors, roof bars or the like. Currently such clips or fasteners are often mounted in openings with hand setting tools.

This handling has various disadvantages. The work is unergonomic for the employee placing these fasteners. There is the possibility that these fasteners may be placed incorrectly. It can also not be excluded that, although the fastener is placed in the correct position, it is not pressed into the vehicle body with sufficient force and therefore does not have a satisfactory retention force. Individual fasteners may also simply be forgotten.

There is therefore a need to fully automatise the setting process of such fasteners.

It is known to fasten plugs for instance with a fully automated fastening machine. For instance, EP2368673A2 discloses a robot tool having a robot mounting area by which the robot tool is attached to an industrial robot and a plunger adapted for setting the plug.

Document EP3476526A1 from the applicant discloses a device for automatically setting sealing plugs in openings in a vehicle body component with a setting unit, a delivery unit and a magazine unit.

However, such devices are specific for setting plugs within openings and are not generally used for setting fastener for instance at a roof bar of a vehicle. Besides, such device are not easily adaptable to work in area difficult to access.

It is therefore an object of the present invention to provide a device for setting fasteners in openings in a vehicle body component which is compact, can store a plurality of fasteners, can be easily reloaded and can easily access congested areas. It is also an object of the present invention to provide a system for setting fasteners and a method for setting fasteners enabling to improve the setting efficiency without damaging the vehicle body component.

Accordingly, the present invention provides a device for setting fasteners in openings in a vehicle body according to claim 1. More particularly, the device for setting fasteners in openings in a vehicle body component comprises:
- a magazine unit adapted to receive and store a plurality of fasteners,
- a setting head with a setting housing and a setting unit provided with:
   a punch operately configured to drive a fastener from a pre-mounted position to a mounted position, the punch being movable from an inactive position to an active position,
   a gripper adapted to retain and guide the fastener,

wherein a first pneumatic linear actuator moves the setting unit from a rest position to a setting position along a setting axis,
wherein the magazine unit is connected to a second linear pneumatic actuator such that the magazine unit can move along a feeding axis, and wherein the feeding axis is perpendicular to the setting axis.

Such device enables a fully automated setting process with a compact setting system. The pneumatic actuators allow to reach reliable setting forces and are easily controlled. Thus, the setting device can access congested area, without being restricted by the magazine unit. Besides, the use of pneumatic actuators is advantageous, since it decrease the software complexity to control the actuators.

Preferably, the gripper comprises two jaws movable between a closed position and a release position, and wherein the punch extends between the jaws in the setting position.. The grippers with two jaws can guide and serves as an abutment for the fasteners. The punch extending between the jaws allows downsizing the device.

Preferably, the jaws of the gripper are slidably movable along a closing axis and toward one another from the release position to the closed position. The motion of the jaws allows to secure the fasteners directly without any risk of unwanted rotation of the fastener.

Preferably, the magazine unit comprises a rail adapted to receive the fasteners with a first end directed to the gripper and a second end adapted to communicate with a feeder. The rail is the only interface between the feeder and the gripper.

Preferably, the magazine unit comprises an isolation unit for isolating one fastener at the first end of the rail. The isolation unit is thus directly integrated to the magazine unit.

Advantageously, the isolation unit comprises a gate adapted to separate one fastener from the rest of the fasteners arranged within the rail. The isolation unit is easy to implement and to control.

Preferably, the magazine unit comprises a magazine pusher adapted to push the fasteners toward the first end. Thus, the fasteners are always ready to be moved to the isolation unit and thus to the gripper. The pusher acts also as a security against loss.

Preferably, the magazine pusher is controlled by a linear pneumatic actuator.

The use of a pneumatic actuator, in addition to the other pneumatic actuators allows to implement a setting device controlled only by pneumatic actuators and thus decrease the complexity of the control command.

Advantageously, the magazine pusher comprises a spring-loaded slider. The spring-loaded slider is easy to implement.

Preferably, a position sensor adapted to determine the presence of a fastener in the gripper. The position sensor can be part of a sensor unit adapted to monitor the entire setting process.

Preferably, the magazine unit comprises a movable barrier arranged to separate the rail into two chambers. This movable barrier, which can be implemented within the pusher allows to reload the magazine unit with new fasteners even if there are still remaining fasteners within the rail. This also decreases the interfering contours and the space required by the device. In an embodiment the movable barrier can be actuated and/or locked by another pneumatic actuator.

The present invention is also directed to a setting system comprising a setting device and a feeder, wherein the magazine unit can be removably connected to the feeder for feeding fasteners. The feeder and the magazine unit can be quickly connected for the purpose of reloading fasteners.

Preferably, the feeder comprises a channel for storing a plurality of fasteners, an exit port adaptable to be coupled to a second end of the magazine unit and a feeder pusher adapted to moves the fasteners from the feeder to the magazine unit.

Advantageously, a robot arm adapted to move in three dimensional plane/axis is provided, and the setting device is connected to the robot arm. The robot arm is adapted to move the setting device up to a setting position such that the fastener faces an opening of a vehicle body component, for instance.

Finally, the invention is directed to a method for setting a fastener into an opening of a vehicle body component comprising the steps of:
a. Providing a device for setting fasteners,
b. loading a plurality of fasteners within the magazine unit
c. isolating one fastener of the plurality of fastener within the magazine unit,
d. securing the one fastener with the gripper
e. providing a workpiece with an opening
e. moving the gripper and the fastener to the opening
f. inserting the fastener in the opening
g. moving the punch in order to set the fastener within the opening
   The steps allows a quick setting process and can easily be implemented and controlled.

Preferably, the method further comprises the steps of moving the magazine unit from a rear to a front position and from a front to a rear position in order to set the fastener and/or to load the magazine unit. These motions allow to increase the setting time and the compacity of the system.

Advantageously, the fasteners are inserted in the opening through the setting unit, wherein a correct setting depth of the fasteners within the opening is realized through a sensor unit, and wherein the punch pushes the clip in a direction of insertion until the fastener spreads. The method allows a good monitoring of the different setting parameters, such as setting force, setting depth, setting length, number of remaining fasteners in the magazine unit, ...

The setting device is entirely controlled by pneumatic actuators. As previously mentioned, this simplifies the control command and reduce the risk of error or outages.

Other characteristics and advantages of the invention will readily appear from the following description of embodiments, provided as non-limitative examples, in reference to the accompanying drawings.

In the drawings:
Fig. 1 schematically shows a setting system with a device for setting fasteners according to the invention, a feeder for feeding the fasteners into the device and a controller;
Fig. 2A and Fig. 2B schematically shows a portion of a magazine unit and a gripper of the device of Fig. 1, respectively with and without a fastener;
Fig. 3 shows a perspective view of a jaw of the gripper of Fig. 2A and Fig. 2B;
Fig. 4 is a perspective view of the magazine unit;
Fig. 5 shows a detail of the magazine unit of Fig. 4;
Fig. 6 shows a pusher of the magazine unit of Fig. 4 or Fig. 5;
Fig. 7 shows a detail of the magazine unit of Fig. 4 with fasteners arranged in a rail and a gate provided to isolate one fastener from the others;
Fig. 8A and Fig. 8B show a side and a perspective view of the device with the magazine unit being in a rear position for loading the fasteners and the setting head being in a rest position;
Fig. 9A and Fig. 9B show a side and a perspective view of the device with the magazine unit being in a front position and the setting head being in a rest position;
Fig. 10A and Fig. 10B show a side and a perspective view of the device with the magazine unit being in a rear position and the setting head being in a setting position.

On the different figures, the same reference signs designate identical elements.

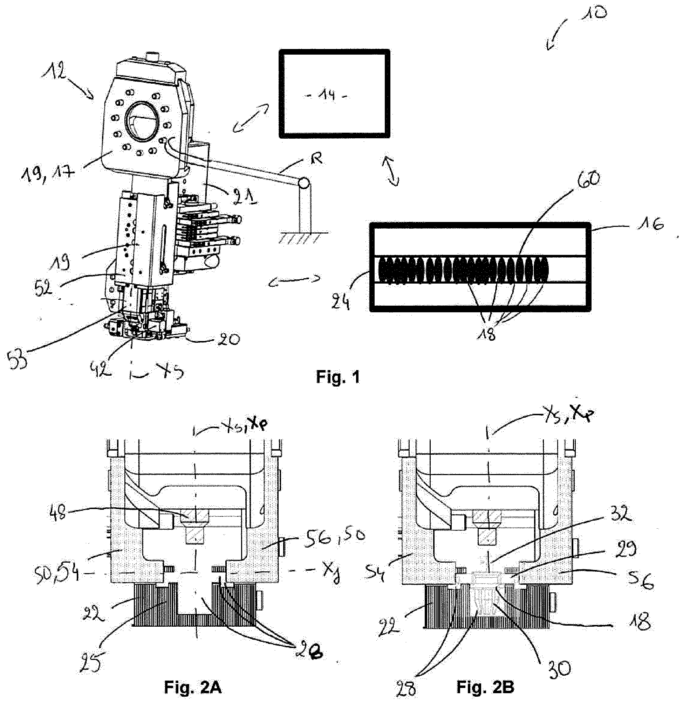

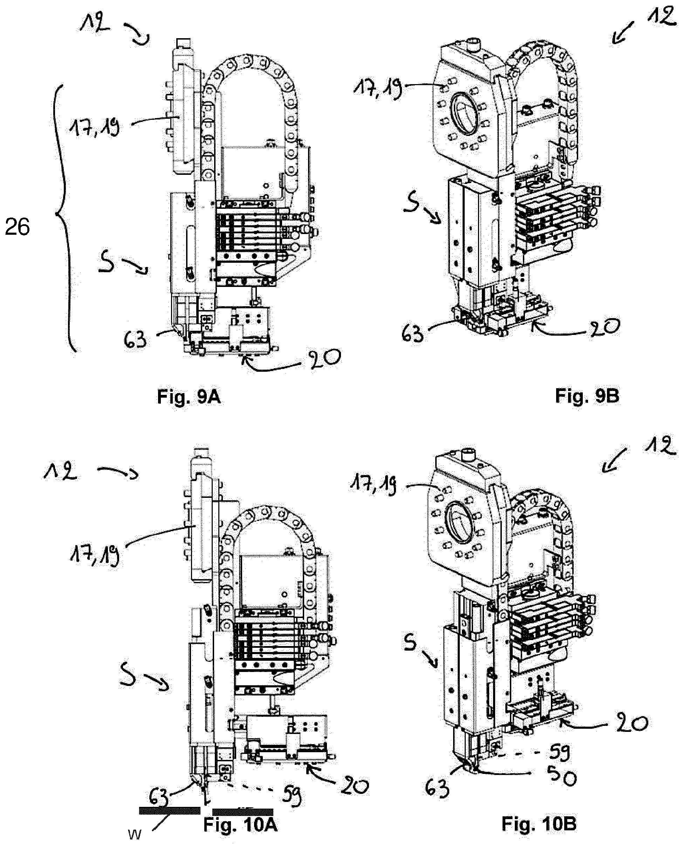

Referring now to Fig. 1 a setting system 10 for setting fasteners in openings in a vehicle body component can be seen. The setting system 10 comprises a setting device 12 according to the invention, a controller 14 and a feeder 16. The setting device 12 is for instance connected to a robot arm R, which moves the setting device 12 in three dimensional plane/axis. The robot arm can be attached to a setting housing 19, and for instance an adaptor plate 17 of the setting device 12. The feeder 16 is adapted to provide one or a plurality of fasteners 18 to the setting device 12. After loading the fasteners 18, the setting device 12 can be driven to a workpiece W (see Fig. 10A) by the robot arm R and can set and lock a fastener 18 into a hole of the workpiece. The controller 14 controls the different parameters like the setting forces or when there is a need to reload the setting device.

The setting device 12 comprises notably a setting head 26 with the setting housing 19 and a setting unit S, and a magazine unit 20 adapted to receive a plurality of fasteners 18. The setting housing 19 can for instance comprises the adaptor plate 17, a console 21, and other necessary components notably for the pneumatical connections. The setting unit S will be described in more details below.

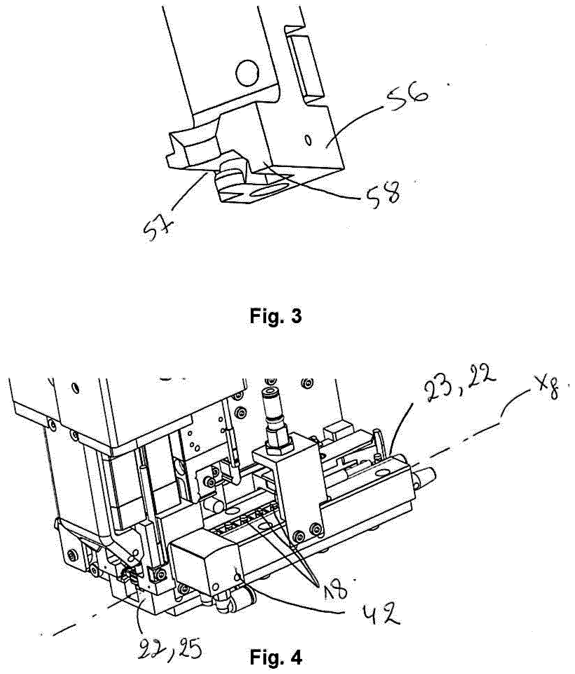

The magazine unit 20 comprises for instance a rail 22 extending longitudinally along a feeding axis Xf (see for instance Fig. 4, Fig. 5, or Fig. 7). The rail 22 is adapted to receive a plurality of fasteners 18. The rail 22 extends longitudinally along the feeding axis Xf between an entry port and an exit port. The entry port is the second end 23 and is adapted to be coupled to a feeder exit port 24. The exit port is the first end 25 and is adapted to cooperate with a setting head 26. As visible notably in Fig. 2A and Fig. 2B, the rail 22 comprises a slit 28. In a cross-section, the shape of the slit 28 forms for example a T in order to accommodate the fastener 18. However, in other embodiment, the slit may have a different shape, depending on the shape of the fastener.

More particularly, the fastener 18 is a two-parts fastener, as depicted in Fig. 2B with a flange 29, adapted to rest on a shoulder of the rail 22, an anchoring section 30 adapted to extend in the slit 28 and a pin 32, movable with regard to the anchoring section 30. For instance, the anchoring section 30 and the flange 29 are unitary. The pin 32 is another element. The pin 32 is movable from a pre-mounted position to a mounted position, in which it is inserted into a recess of the anchoring section 30 and thereof applies a force to expand said anchoring section 30. The expanded anchoring section 30 forms an interference fit with the boundaries of the opening and thus the fastener 18 is securely retained within the opening. The pin 32 of the fastener 18 extends outside of the slit 28. As previously mentioned, the fastener may have other shapes and the slit 28 is adapted to the shape of the fastener in order to maintain and guide such fastener 18.

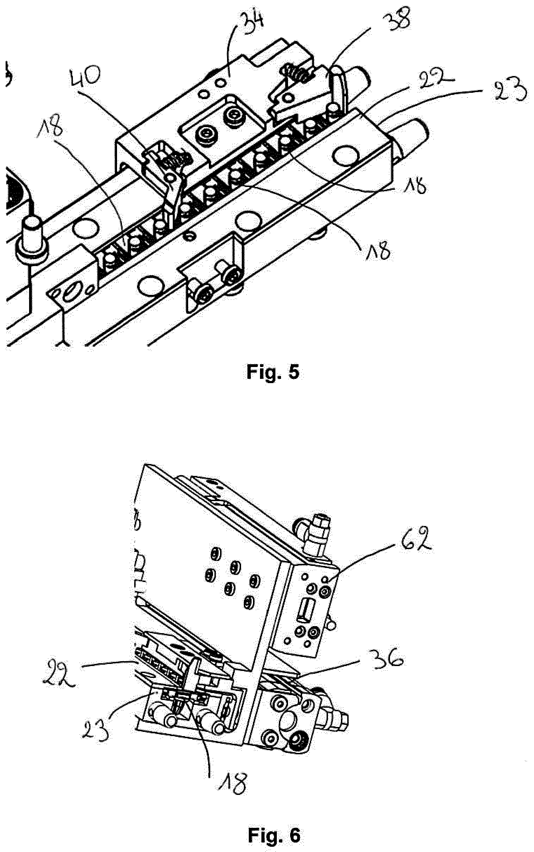

The magazine unit 20 comprises further a magazine pusher 34 as better seen in Fig. 5. The magazine pusher 34 is adapted to push the fasteners 18 toward the first end 25. The magazine pusher 34 is controlled by a pusher pneumatic actuator 36 (see Fig. 6). The magazine pusher 34 comprises a spring-loaded slider 38 elastically movable to get the fasteners 18 into the slit 28 and adapted to retain the fasteners 18 within the slit 28. The spring loaded slider 38 forms a gate which only opens to get the fasteners into the slit or rail 22. The spring loaded slider 38 is actually a first spring-loaded slider 38 and is adapted to contact the last fastener entered into the rail 22, when the magazine unit is not in a loading position. In other words, the first spring-loaded slider 38 contacts the fastener in the vicinity of the second end 23.

The magazine pusher 34 further comprises a second spring loaded slider 40, sensibly similar to the first spring loaded slider 38. The second spring loaded slider 40 is arranged at a non-zero distance from the first spring loaded slider 38. The second spring loaded slider 40 allows to separate the rail 22 into two chambers in order to facilitate reloading of fasteners 18 when the rail 22 is not empty.

The magazine unit 20 may be coupled to a sensor adapted to determine if the magazine is fully loaded with fasteners or not. The sensor may be an inductive sensor. The sensor can be coupled directly to a pneumatic actuator.

The magazine unit 20 may be coupled to a displacement measurement system (not represented) adapted to determine the position of the last fastener within the rail.

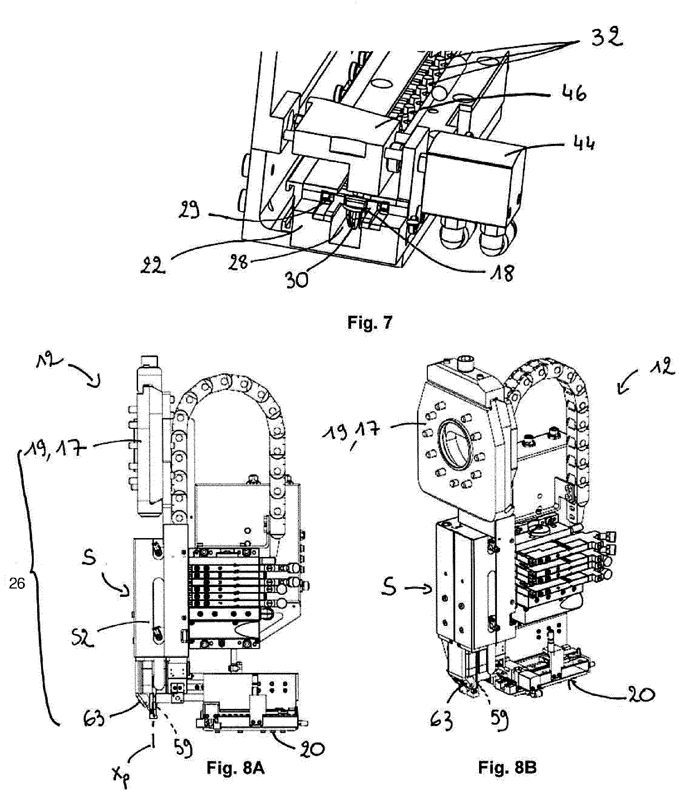

The magazine unit 20 also comprises an isolation unit 44, as visible in Fig. 7 adapted for isolating one fastener 18 at the first end 25 of the rail. The isolation unit 44 comprises for instance a gate 46 which can be pneumatically actuated. The gate 46 is arranged at the vicinity of the first end 25. The gate 46 is arranged above the rail 22. For instance, the gate interacts with a pin 32 of a fastener to prevent the pin 32, and therefore the fastener 18 to move forward within the rail 22. The gate 46 does not contact the anchoring section or the flange of the fastener 18. More particularly the gate 46 can extend between a pin of a first fastener 18 arranged at the first end 25 and a pin of a second fastener 18 arranged directly after the first fastener 18. In other embodiments, the gate may extend at least partly within the rail 22.

The magazine unit 20 is coupled to the setting head 26 to form a compact assembly.

The setting head 26 comprises as previously mentioned the setting unit S. The setting unit S comprises a punch 48, a gripper 50. A first pneumatic actuator 52 is operately configured to drive the setting unit S from a rest position to a setting position. In the rest position the setting unit S is adapted to receive a fastener within the gripper 50. In the setting position, the setting unit S is arranged facing an opening of a workpiece W such that the anchoring portion of a fastener is arranged within the opening. The setting unit is also adapted to be in the rest position when the magazine unit 20 is reloaded.

The punch 48 is operately configured to drive a fastener 18 from a pre-mounted position (in which for instance the pin is not entirely inserted into the anchoring section 30) to a mounted position, the punch 48 being movable from a rest position to a setting position. In the rest position, the punch 48 is at a non-zero distance from the fastener 18. In the setting position, the punch 48 applies a force on the fastener 18. For instance, the punch 48 applies a force on the fastener once the clip seats within an opening of a workpiece. This force allows to push the pin 32 within the anchoring section and thus to lock the fastener 18 within the opening of the workpiece. More particularly the punch 48 is linearly movable along a punch axis Xp. The punch 48 is designed to apply a force on the pin 32 of the fastener in order to lock the fastener within an opening. The punch 48 is moved and controlled by a punch pneumatic actuator 53 between an inactive position and an active position. The punch pneumatic actuator 53 moves the punch 48 from the inactive position to the active position (and from the active position to the inactive position) along the setting axis Xs. In the inactive position, the punch 48 is at a non-zero distance of the fastener 18 (and more particularly of the pin 32). In the active position, the punch 48 applies an effort on the pin 32 in order to lock the fastener within the opening of the workpiece.

The gripper 50 is adapted to retain and guide the fastener 18. The gripper 50 is for instance movable from a first end 25 of the rail 22 to a setting position in which the fastener 18 is mounted into a hole or an opening. More particularly, in a rest position of the setting unit S, the gripper 50 is arranged at a predetermined position along the setting axis Xs. In a setting position, the gripper 50 is arranged at another predetermined position along the setting axis Xs. For example, the setting unit S can move from the rest position to the setting position with a stroke of about 75 mm. In other embodiments, the stroke can be more or less than 75 mm. The punch 48 is adapted to extend through the gripper 50 in order to obtain a compact setting device 12, notably when the setting unit S is in the setting position.

The gripper 50 comprises two jaws 54, 56 movables between a closed position and a release position. In the closed position, the jaws 54, 56 are adapted to grip, retain and/or guide the fastener 18. The fastener 18 is held positively in the gripper. In the release position, the jaws 54, 56 do not apply any effort of the fastener 18. The first jaw 54 is for example identical to the second jaw 56 in a mirror symmetry. The first jaw and the second jaw may be L-shaped. The first jaw 54 faces the second jaw 56. The first and second jaws 54, 56 are slidably movable toward another. Fig. 3 shows a detail of a jaw 56. The shape of the jaw 54, 56 is such that it can retain a fastener without damaging said fastener 18. More particularly, the jaw 54, 56 has a recess 57 to accommodate for instance a flange of the fastener and an abutment portion 58 (for instance a rim) to retain the fastener when it slides from the rail to the jaws 54, 56. In the setting position, the punch 48 extends between the jaws 54, 56, such that the punch 48 can apply a force on the fastener 18, and in particular to the pin of the fastener 18.

The punch 48 is for instance slidably movable between the jaws 54, 56. The punch 48 moves along the punch axis Xp, whereas the jaws 54, 56 are slidably movable along a jaw axis Xj, the jaw axis Xj being perpendicular to the punch axis Xp. More particularly the punch axis Xp extended substantially parallel to the setting axis Xs, and even more particularly the punch axis corresponds to the setting axis.

In another preferred embodiment (not represented), the jaws can also rotate to catch and retain the fastener.

The positions of the setting unit S and the magazine unit 20 are dependent from the different operations to be realized by the setting device 12. For instance, when the setting unit S is in a rest position and the magazine unit 20 is in a front position, the second end of the rail 22 is in the vicinity of the gripper 50, as depicted in Fig. 9A and Fig. 9B. When the setting unit S is in a rest position and the magazine unit 20 is in a rear position, the second end of the rail 22 is at a predetermined distance from the gripper, and the setting unit S has a greater freedom of movement, as depicted in Fig. 8A and Fig. 8B. When the setting unit S is in a setting position and the magazine unit 20 is in a rear position, the second end of the rail 22 is at a predetermined distance from the gripper, and the setting and locking operations of the fastener can be realized, as depicted in Fig. 10A and Fig. 10B.

The feeder 16 comprises a channel 60 adapted to receive a plurality of fasteners 18. The channel 60 is provided with the feeder exit port 24. The feeder exit port 24 can be coupled to the second end 23 of the rail 22 in order to load the fasteners from the feeder to the magazine unit. For instance, the magazine unit 20 is for example adapted to store up to 20 fasteners (or up to 16 fasteners).

In order to load fasteners 18 from the feeder 16 into the magazine unit 20 of the setting device 12, the following steps are realized.

For example, if the setting unit S is in a rest position and the magazine unit 20 in a front position, the magazine unit 20 is first moved from the front position to a rear position, as depicted in Fig. 8A and Fig. 8B. This rear position is for instance a first rear position and corresponds to a loading position. The magazine unit 20 is actually actuated by a second pneumatic actuator 62 (see Fig. 6) and can slidably move with regard to the housing 19 and the gripper. The magazine unit 20 can move along the feeding axis Xf from the front position to the rear position. The feeding axis Xf is substantially perpendicular to the setting axis Xs.

The setting device S is in a loading position when the setting unit is in a rest position and the magazine unit is in the first rear position, as shown in Fig. 8A and Fig. 8B. In the loading position, the magazine unit 20 is at a distance from the gripper 50, as described above. If there are some remaining fasteners in the magazine unit 20, the pusher, through the second spring loaded slider can retain all the remaining fastener in the first chamber directed toward the gripper 50. The second chamber directed toward the second end of the rail is then empty and can receive new fasteners 18 from the feeder 16. Eventually a sensor is provided to detect that a locking of the second spring loaded slider was operated, such that the two chambers are surely separated. The magazine unit 20 and more precisely the second end 23 of the rail is docketed to the feeder exit port 24. The fasteners 18 are moved from the feeder 16 to the rail 22. When the last fastener 18 enters the rail 22, a signal can be sent to the controller 14 and the magazine unit 20 can move back in a position such that the first end of the rail is in the vicinity of the gripper 50. Eventually, the magazine unit may also be manually loaded with the fasteners.

Before any setting operation, a fastener 18 needs to be loaded from the magazine unit 20 to the gripper 50. The magazine unit 20 is for instance moved from the first rear position to the front position in order to be coupled to the gripper 50, as shown in fig. 9A and Fig. 9B. A fastener 18 is isolated from the plurality of fasteners in the rail 22. This is done by the isolation unit 44 and more particularly by the gate 46 arranged in the vicinity of the first end. The gate 46 separates exactly one fastener 18 from the other fasteners. The gripper 50 may act as an abutment and the fastener isolated by the gate abuts against the gripper. The fastener 18 is thus inserted (or at least partly inserted) into an opening formed by the two jaws 54, 56. The two jaws 54, 56 can be moved from the release position to the closed position in order to securely retain the fastener. A sensor 63, for instance an optical sensor may be arranged on the setting unit in order to detect the presence of a fastener within or between the jaws.

Once the setting unit S is loaded with one fastener, a setting step can be undertaken. The magazine unit 20 first moves back to a rear position, notably along the feeder axis Xf. The rear position can be a second rear position, different from the first rear position. Thus the magazine unit 20 moves away from the gripper 50 and the setting unit S. The setting device 12 can then be moved by the robot arm R to the setting position before or after the magazine unit 20 has reached a rear position (notably a second rear position). For instance, the setting device 12 is moved such that the fastener faces an opening in a workpiece. The setting unit S can then slidably move toward the opening along the setting axis Xs in order to place the anchoring section of the fastener in the opening. The setting unit S is thus in the setting position, as seen in Fig. 10A or Fig. 10B. The correct positioning of the fastener 18 can be determined by a sensor 59. The sensor 59 may be provided to detect the position of the setting unit with regard to the workpiece. The sensor 59 is an inductive sensor. More particularly the sensor 59 detects if the setting unit is correctly arranged on the workpiece or at a predetermined distance from the workpiece such that the anchoring section is correctly inserted into the opening. More particularly, the correct depth of the fastener into the opening can be determined by the sensor unit. The gripper 50 can move from the closed position to the release position. Then, a signal can be sent to the punch pneumatic actuator 53 to drive the punch 48 along the punch axis Xp. The punch 48 slides from an inactive position to an active position, in which it applies a force on the pin such that the expansion of the anchoring section 30 of the fastener is realized. The fastener 18 is then securely mounted (or locked) to the workpiece. The gripper 50 can maintain the fastener 18 during the setting step, when the punch applies a force on the fastener.

The setting device 12 thus is entirely pneumatic. It does not need any electrical actuator. This allows reducing the complexity of the software and no particular controller for electric actuator is necessary. The setting device and the setting system enables a better monitoring of the entire setting process. The setting forces and locking forces can be limited by limiting the pneumatic pressure, such that damage to the car body can be avoided. Besides, the different pneumatic actuators can be controlled with different pressions. The setting device can easily be adapted to different shape of fasteners, with a minimum change. Such setting device is also light with modulable setting forces and particularly compact.

### Nomenclature

a setting system 10
setting device 12
controller 14
feeder 16
adaptor plate 17
fasteners 18
housing 19
magazine unit 20
console 21
rail 22
second end 23
feeder exit port 24
first end 25
setting head 26
slit 28
anchoring section 30
pin 32
magazine pusher 34
pusher pneumatic actuator 36
(first) spring-loaded slider 38
second spring loaded slider 40
isolation unit 44
gate 46
punch 48
gripper 50
first pneumatic actuator 52
locking cylinder 53
two jaws 54, 56
recess 57
abutment portion 58
sensor 59
channel 60
second pneumatic actuator 62
sensor 63
workpiece W
Setting unit S

## Claims

1. Device (12) for setting fasteners (18) in openings in a vehicle body component, comprising:
- a magazine unit (20) adapted to receive and store a plurality of fasteners (18),
- a setting head (26) with a setting housing and a setting unit provided with:
∘ a punch (48) operately configured to drive a fastener from a pre-mounted position to a mounted position, the punch (48) being movable from an inactive position to an active position,
∘ a gripper (50) adapted to retain and guide the fastener,
wherein a first pneumatic linear actuator moves the setting unit from a rest position to a setting position along a setting axis (Xs),
**characterized in that** the magazine unit (20) is connected to a second linear pneumatic actuator (62) such that the magazine unit (20) can move along a feeding axis (Xf), and wherein the feeding axis is perpendicular to the setting axis (Xs).

2. Device (12) according to claim 1, wherein the gripper (50) comprises two jaws (54, 56) movable between a closed position and a release position, and wherein the punch (48) extends between the jaws in the setting position.

3. Device (12) according to claim 2, wherein the jaws of the gripper (50) are slidably movable along a jaw axis (Xj) and toward one another from the release position to the closed position.

4. Device (12) according to any of claims 1 to 3, wherein the magazine unit (20) comprises a rail (22) adapted to receive the fasteners (18) with a first end directed to the gripper (50) and a second end adapted to communicate with a feeder (16), wherein the magazine unit (20) comprises an isolation unit (44) for isolating one fastener at the first end of the rail.

5. Device (12) according to claim 4, wherein the isolation unit comprises a gate adapted to separate one fastener from the rest of the fasteners (18) arranged within the rail.

6. Device (12) according to any of claims 1 to 5, wherein the magazine unit (20) comprises a magazine pusher (34) adapted to push the fasteners (18) toward the first end, and wherein the magazine pusher (34) is controlled by a linear pneumatic actuator (36).

7. Device (12) according to claim 6, wherein the magazine pusher (34) comprises a spring-loaded slider (38).

8. Device (12) according to any of claims 1 to 7, further comprising a position sensor adapted to determine the presence of a fastener in the gripper.

9. Device (12) according to any of claims 1 to 8, wherein the magazine unit (20) comprises a movable barrier (40) arranged to separate the rail (22) into two chambers.

10. Setting system comprising a device (12) according to any of claims 1 to 9 and a feeder, wherein the magazine unit (20) can be removably connected to the feeder for feeding fasteners (18).

11. Setting system according to claim 10, wherein the feeder comprises a channel (60) for storing a plurality of fasteners (18), an exit port adaptable to be coupled to a second end of the magazine unit (20) and a feeder pusher adapted to move the fasteners (18) from the feeder to the magazine unit (20).

12. Setting system according to claim 10 or 11, further comprising a robot arm (R) adapted to move in three dimensional plane/axis, and wherein the setting housing is connected to the robot arm.

13. Method for setting a fastener into an opening of a vehicle body component comprising the steps of:
a. Providing a device (12) for setting fasteners (18) according to any of claims 1 to 9,
b. loading a plurality of fasteners (18) within the magazine unit (20)
c. isolating one fastener of the plurality of fastener within the magazine unit (20),
d. securing the one fastener with the gripper (50)
e. providing a vehicle body component with an opening
e. moving the gripper (50) and the fastener to the opening
f. inserting the fastener in the opening
g. moving the punch (48) in order to set the fastener within the opening

14. Method according to claim 13, further comprising the steps of moving the magazine unit (20) from a rear to a front position and from a front to a rear position in order to set the fastener (18) and/or to load the magazine unit (20).

15. Method according to claim 13 or 14, wherein the fasteners (18) are inserted in the opening through the setting unit, wherein a correct setting depth of the fasteners (18) within the opening is realized through a sensor unit, and wherein the punch (48) pushes the clip in a direction of insertion until the fastener spreads.

## Patentansprüche

1. Vorrichtung (12) zum Setzen von Befestigungselementen (18) in Öffnungen in einer Fahrzeugkarosseriekomponente, umfassend:
- eine Magazineinheit (20), die dazu ausgelegt ist, eine Vielzahl von Befestigungselementen (18) aufzunehmen und aufzubewahren,
- einen Setzkopf (26) mit einem Setzgehäuse und einer Setzeinheit, versehen mit:
- einem Stempel (48), der betriebsmäßig so konfiguriert ist, dass er ein Befestigungselement von einer vormontierten Position in eine montierte Position treibt, wobei der Stempel (48) von einer inaktiven Position in eine aktive Position bewegbar ist,
- einem Greifer (50), der dazu ausgelegt ist, das Befestigungselement festzuhalten und zu führen,
wobei ein erster pneumatischer linearer Aktuator die Setzeinheit entlang einer Setzachse (Xs) von einer Ruheposition in eine Setzposition bewegt,
**dadurch gekennzeichnet, dass** die Magazineinheit (20) mit einem zweiten pneumatischen linearen Aktuator (62) verbunden ist, so dass sich die Magazineinheit (20) entlang einer Vorschubachse (Xf) bewegen kann, und wobei die Vorschubachse senkrecht zur Setzachse (Xs) ist.

2. Vorrichtung (12) nach Anspruch 1, wobei der Greifer (50) zwei Backen (54, 56) umfasst, die zwischen einer geschlossenen Position und einer Freigabeposition bewegbar sind, und wobei sich der Stempel (48) in der Setzposition zwischen den Backen erstreckt.

3. Vorrichtung (12) nach Anspruch 2, wobei die Backen des Greifers (50) entlang einer Backenachse (Xj) und aufeinander zu von der Freigabeposition in die geschlossene Position verschiebbar sind.

4. Vorrichtung (12) nach einem der Ansprüche 1 bis 3, wobei die Magazineinheit (20) eine Schiene (22) umfasst, die dazu ausgelegt ist, die Befestigungselemente (18) so aufzunehmen, dass ein erstes Ende zum Greifer (50) gerichtet ist und ein zweites Ende dazu ausgelegt ist, mit einem Zuführer (16) zu kommunizieren, wobei die Magazineinheit (20) eine Isoliereinheit (44) zum Isolieren eines Befestigungselements am ersten Ende der Schiene umfasst.

5. Vorrichtung (12) nach Anspruch 4, wobei die Isoliereinheit ein Tor umfasst, das dazu ausgelegt ist, ein Befestigungselement vom Rest der innerhalb der Schiene angeordneten Befestigungselemente (18) zu trennen.

6. Vorrichtung (12) nach einem der Ansprüche 1 bis 5, wobei die Magazineinheit (20) einen Magazinschieber (34) umfasst, der dazu ausgelegt ist, die Befestigungselemente (18) in Richtung des ersten Endes zu schieben, und wobei der Magazinschieber (34) durch einen pneumatischen linearen Aktuator (36) gesteuert wird.

7. Vorrichtung (12) nach Anspruch 6, wobei der Magazinschieber (34) einen federbelasteten Schieber (38) umfasst.

8. Vorrichtung (12) nach einem der Ansprüche 1 bis 7, die weiter einen Positionssensor umfasst, der dazu ausgelegt ist, das Vorhandensein eines Befestigungselements im Greifer zu bestimmen.

9. Vorrichtung (12) nach einem der Ansprüche 1 bis 8, wobei die Magazineinheit (20) eine bewegliche Barriere (40) umfasst, die dazu angeordnet ist, die Schiene (22) in zwei Kammern zu trennen.

10. Setzsystem, das eine Vorrichtung (12) nach einem der Ansprüche 1 bis 9 und einen Zuführer umfasst, wobei die Magazineinheit (20) zum Zuführen von Befestigungselementen (18) abnehmbar mit dem Zuführer verbunden werden kann.

11. Setzsystem nach Anspruch 10, wobei der Zuführer einen Kanal (60) zum Aufbewahren einer Vielzahl von Befestigungselementen (18), eine Ausgangsöffnung, die dazu ausgelegt werden kann, an ein zweites Ende der Magazineinheit (20) gekoppelt zu werden, und einen Zuführerschieber, der dazu ausgelegt ist, die Befestigungselemente (18) von dem Zuführer zur Magazineinheit (20) zu bewegen, umfasst.

12. Setzsystem nach Anspruch 10 oder 11, das weiter einen Roboterarm (R) umfasst, der dazu ausgelegt ist, sich in dreidimensionaler Ebene/Achse zu bewegen, und wobei das Setzgehäuse mit dem Roboterarm verbunden ist.

13. Verfahren zum Setzen eines Befestigungselements in eine Öffnung einer Fahrzeugkarosseriekomponente, umfassend die Schritte:
a. Bereitstellen einer Vorrichtung (12) zum Setzen von Befestigungselementen (18) nach einem der Ansprüche 1 bis 9,
b. Laden einer Vielzahl von Befestigungselementen (18) innerhalb die Magazineinheit (20)
c. Isolieren eines Befestigungselements der Vielzahl von Befestigungselementen innerhalb der Magazineinheit (20),
d. Sichern des einen Befestigungselements mit dem Greifer (50)
e. Bereitstellen einer Fahrzeugkarosseriekomponente mit einer Öffnung
e. Bewegen des Greifers (50) und des Befestigungselements zur Öffnung
f. Einsetzen des Befestigungselements in die Öffnung
g. Bewegen des Stempels (48), um das Befestigungselement innerhalb der Öffnung zu platzieren

14. Verfahren nach Anspruch 13, das weiter die Schritte zum Bewegen der Magazineinheit (20) von einer hinteren in eine vordere Position und von einer vorderen in eine hintere Position umfasst, um das Befestigungselement (18) zu setzen und/oder die Magazineinheit (20) zu laden.

15. Verfahren nach Anspruch 13 oder 14, wobei die Befestigungselemente (18) durch die Setzeinheit in die Öffnung eingesetzt werden, wobei eine korrekte Setztiefe der Befestigungselemente (18) innerhalb der Öffnung durch eine Sensoreinheit realisiert wird, und wobei der Stempel (48) die Klammer in eine Einsatzrichtung schiebt, bis sich das Befestigungselement aufspreizt.

## Revendications

1. Dispositif (12) pour poser des attaches (18) dans des ouvertures d'un composant de carrosserie de véhicule, comprenant :
- une unité de magasin (20) adaptée pour recevoir et stocker une pluralité d'attaches (18),
- une tête de pose (26) avec un boîtier de pose et une unité de pose munie de :
- un poinçon (48) configuré fonctionnellement pour enfoncer une attache depuis une position prémontée jusqu'à une position montée, le poinçon (48) étant mobile d'une position inactive à une position active,
- une pince (50) adaptée pour retenir et guider l'attache,
dans lequel un premier actionneur linéaire pneumatique déplace l'unité de pose d'une position de repos à une position de pose le long d'un axe de pose (Xs),
**caractérisé en ce que** l'unité de magasin (20) est reliée à un deuxième actionneur pneumatique linéaire (62) de telle sorte que l'unité de magasin (20) peut se déplacer le long d'un axe d'alimentation (Xf), et dans lequel l'axe d'alimentation est perpendiculaire à l'axe de pose ( Xs).

2. Dispositif (12) selon la revendication 1, dans lequel la pince (50) comprend deux mâchoires (54, 56) mobiles entre une position fermée et une position de libération, et dans lequel le poinçon (48) s'étend entre les mâchoires dans la position de pose.

3. Dispositif (12) selon la revendication 2, dans lequel les mâchoires de la pince (50) sont mobiles de manière coulissante le long d'un axe de mâchoire (Xj) et l'une vers l'autre depuis la position de libération jusqu'à la position fermée.

4. Dispositif (12) selon l'une quelconque des revendications 1 à 3, dans lequel l'unité de magasin (20) comprend un rail (22) adapté pour recevoir les attaches (18) avec une première extrémité dirigée vers la pince (50) et une seconde extrémité adaptée pour communiquer avec un alimentateur (16), l'unité de magasin (20) comprenant une unité d'isolement (44) pour isoler une attache au niveau de la première extrémité du rail.

5. Dispositif (12) selon la revendication 4, dans lequel l'unité d'isolement comprend une porte adaptée pour séparer une attache du reste des attaches (18) disposées à l'intérieur du rail.

6. Dispositif (12) selon l'une quelconque des revendications 1 à 5, dans lequel l'unité de magasin (20) comprend un poussoir de magasin (34) adapté pour pousser les attaches (18) vers la première extrémité, et dans lequel le poussoir de magasin (34) est commandé par un actionneur pneumatique linéaire (36).

7. Dispositif (12) selon la revendication 6, dans lequel le poussoir de magasin (34) comprend un coulisseau sollicité par ressort (38).

8. Dispositif (12) selon l'une quelconque des revendications 1 à 7, comprenant en outre un capteur de position adapté pour déterminer la présence d'une attache dans la pince.

9. Dispositif (12) selon l'une quelconque des revendications 1 à 8, dans lequel l'unité de magasin (20) comprend une barrière mobile (40) agencée pour séparer le rail (22) en deux chambres.

10. Système de pose comprenant un dispositif (12) selon l'une quelconque des revendications 1 à 9 et un alimentateur, dans lequel l'unité de magasin (20) peut être reliée de manière amovible à l'alimentateur pour délivrer des attaches (18).

11. Système de pose selon la revendication 10, dans lequel l'alimentateur comprend un canal (60) pour stocker une pluralité d'attaches (18), un orifice de sortie adaptable pour être couplé à une seconde extrémité de l'unité de magasin (20) et un poussoir d'alimentateur adapté pour déplacer les attaches (18) depuis l'alimentateur vers l'unité de magasin (20).

12. Système de pose selon la revendication 10 ou 11, comprenant en outre un bras robotisé (R) adapté pour se déplacer sur un plan/axe en trois dimensions, et dans lequel le boîtier de pose est relié au bras robotisé.

13. Procédé de pose d'une attache dans une ouverture d'un composant de carrosserie de véhicule comprenant les étapes suivantes :
a. fournir un dispositif (12) pour poser des attaches (18) selon l'une quelconque des revendications 1 à 9,
b. charger une pluralité d'attaches (18) à l'intérieur de l'unité de magasin (20)
c. isoler une attache de la pluralité d'attaches à l'intérieur de l'unité de magasin (20),
d. immobiliser ladite une attache avec la pince (50)
e. fournir un composant de carrosserie de véhicule muni d'une ouverture
e. déplacer la pince (50) et l'attache vers l'ouverture
f. insérer l'attache dans l'ouverture
g. déplacer le poinçon (48) afin de poser l'attache à l'intérieur de l'ouverture

14. Procédé selon la revendication 13, comprenant en outre les étapes consistant à déplacer l'unité de magasin (20) d'une position arrière à une position avant et d'une position avant à une position arrière afin de poser l'attache (18) et/ou de charger l'unité de magasin (20).

15. Procédé selon la revendication 13 ou 14, dans lequel les attaches (18) sont insérées dans l'ouverture à travers l'unité de pose, dans lequel une profondeur de pose correcte des attaches (18) à l'intérieur de l'ouverture est obtenue au moyen d'une unité de capteur, et dans lequel le poinçon (48) pousse le clip dans un sens d'insertion jusqu'à ce que l'attache s'écarte.
